# FASCICULE DE BREVET EUROPEEN

(11) **EP 2 410 094 B1**
(45) Date de publication et mention de la délivrance du brevet: **23.10.2013**
(21) Numéro de dépôt: 11350004.5
(22) Date de dépôt: 07.07.2011
(51) Int. Cl.: E03B 3/03

(54) **Réservoir de stockage d'eau de pluie**
Regenwassertank
Rain water tank

(30) Priorité: 20.07.2010 FR 1003048
(43) Date de publication de la demande: 25.01.2012
(73) Titulaire: Ecol'eaumur, 44150 Ancenis (FR)
(72) Inventeur: Couteau, François, 81300 Graulhet (FR); Cerisier, Fabrice, 44150 Ancenis (FR)
(74) Mandataire: Tournel, Jean Louis

(56) Documents cités:
- WO-A1-2009/030963
- DE-U1-202007 005 707
- GB-A- 2 366 831
- US-A- 5 873 383

## Description

L'invention se rapporte à un réservoir d'eau de pluie.

La récupération d'eau de pluie est de plus en plus pratiquée.

On utilise soit des réservoirs enterrés, soit des réservoirs posés sur le sol.

Le réservoir enterré nécessitant des travaux importants, il est souvent choisi d'utiliser un réservoir posé sur le sol.

Ces réservoirs peuvent être cylindriques ou cubiques en matériau plastique ou en béton etc.

Lorsqu'ils sont en plastique, ils peuvent se déformer sous la pression du contenu. Cette déformation dépend du volume mais également de la forme du réservoir.

La forme parallélépipède rectangle est une forme intéressante car le réservoir peut être adossé à un mur pour ne pas être trop encombrant ou être utilisé à la manière d'un élément de séparation tel un mur. Ces réservoirs ont globalement une longueur de 2m, une hauteur de 1.8m et une épaisseur de 0.4m.

Malheureusement, il se déforme au niveau des deux grandes faces. La présence de nervures est insuffisante.

On connait des réservoirs parallélépipédiques qui, pour apporter une solution à cette déformation présentent des moyens afin de relier localement les deux grandes parois opposées qui se déforment sous la charge.

Une première solution consiste à former des ponts de matières lors du moulage du réservoir. Cette solution est difficile à mettre en oeuvre.

La seconde solution consiste à prévoir à l'intérieur de la cuve des moyens d'accrochage sur les faces en vis à vis pour y glisser des panneaux en treillis servant de moyens de liaison entre les deux parois.

On connait également des réservoirs du document DE A 202007005707 U constitués par des tubes reliés par des conduites en haut et en bas.

Le problème est la fragilité des moyens d'accrochage et la difficulté de les réaliser car cela nécessite des moules à tiroirs qui sont couteux.

L'alimentation de ces réservoirs se fait souvent en utilisant la surface d'une toiture.

Pour ce faire, il est connu de placer le réservoir à proximité d'une maison et de dériver la conduite d'eau provenant de la gouttière provenant du toit vers le réservoir. Cette situation n'est pas toujours possible.

Ces réservoirs collectent de l'eau de pluie qui contient des poussières ou autres.

Des moyens de filtrations existent à l'entrée de ces réservoirs mais ils sont à larges mailles pour ne capter que les feuilles ou éléments similaires et ne pas réduire l'écoulement. Ils ne sont pas efficaces sur des impuretés de petites tailles telles des grains de sable ou de la poussière. Ces impuretés s'accumulent dans le réservoir et il n'est pas aisé de les éliminer. La solution connue consiste à vider le réservoir par un orifice de vidange situé à la base mais il est rare que le débit soit suffisant pour entrainer les dépôts d'impuretés

L'invention se propose d'apporter une solution qui offre à la fois une meilleure résistance à la déformation et une facilité de nettoyage.

A cet effet, l'invention a pour objet, un réservoir de stockage d'eau de pluie de forme s'inscrivant dans un parallélépipède rectangle de tubes cylindriques d'axes verticaux de section circulaire comportant en partie haute des conduites dites supérieures reliant deux à deux les tubes et en partie basse des conduites inférieures reliant deux à deux les tubes, l'ensemble des dits tubes présentant un orifice de remplissage positionné au dessus d'un des tubes dite tube principal ce réservoir étant caractérisé en ce que les conduites inférieures partant de ce tube principal sont situées à un niveau supérieur aux autres conduites inférieures afin de constituer un volume de décantation dans ce dit tube principal.

L'invention sera bien comprise à la lecture de la description ci après faite à titre d'exemple non limitatif en regard du dessin qui représente.

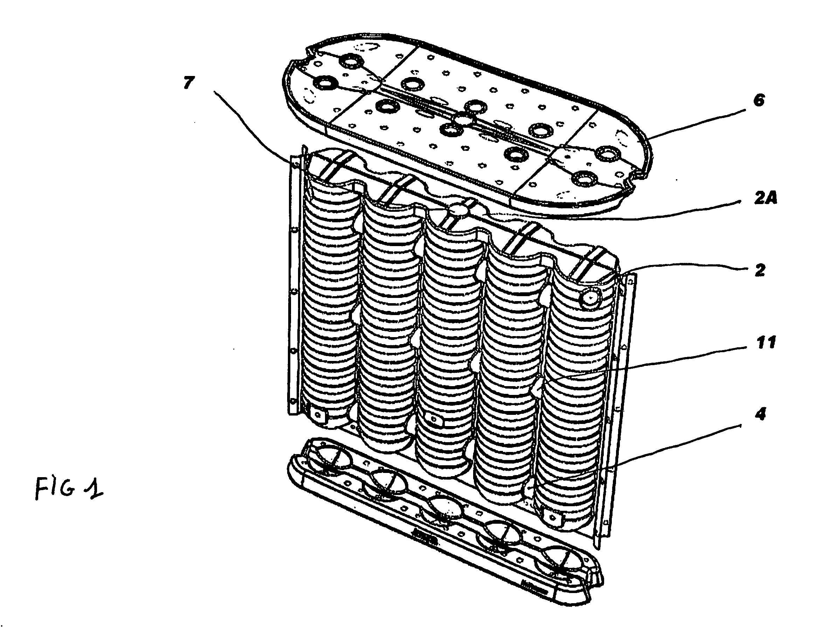

- FIG 1 :: Une vue en éclaté du réservoir

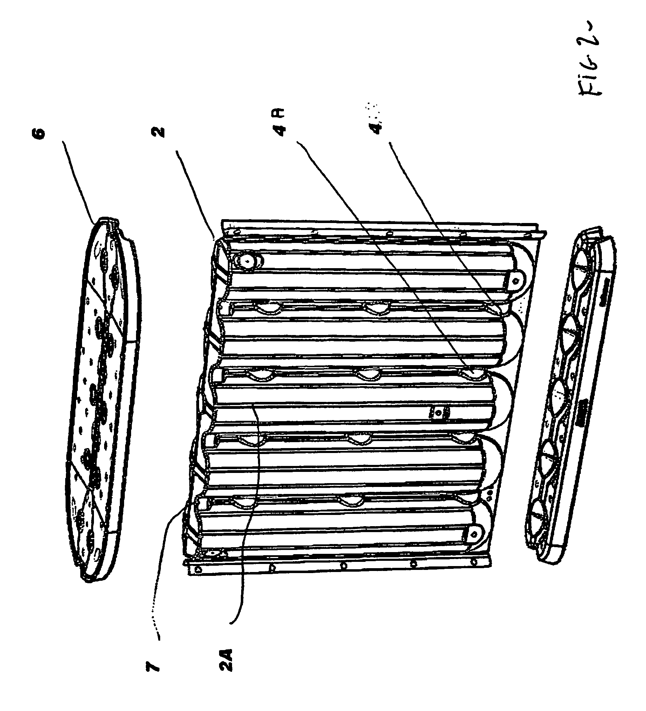

- FIG 2 :: Une seconde vue en éclaté du réservoir

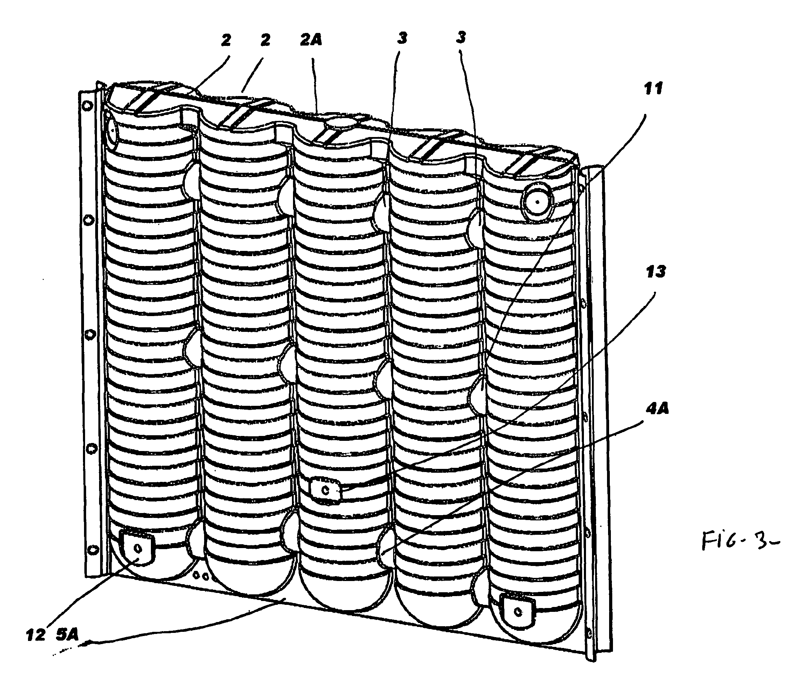

- FIG 3: Le réservoir sans son socle et sa surface de collecte

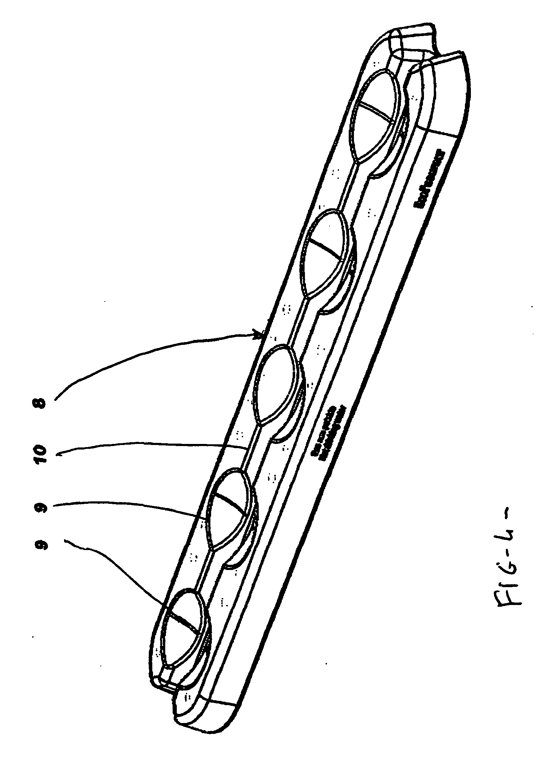

- FIG 4 :: Le socle du réservoir,

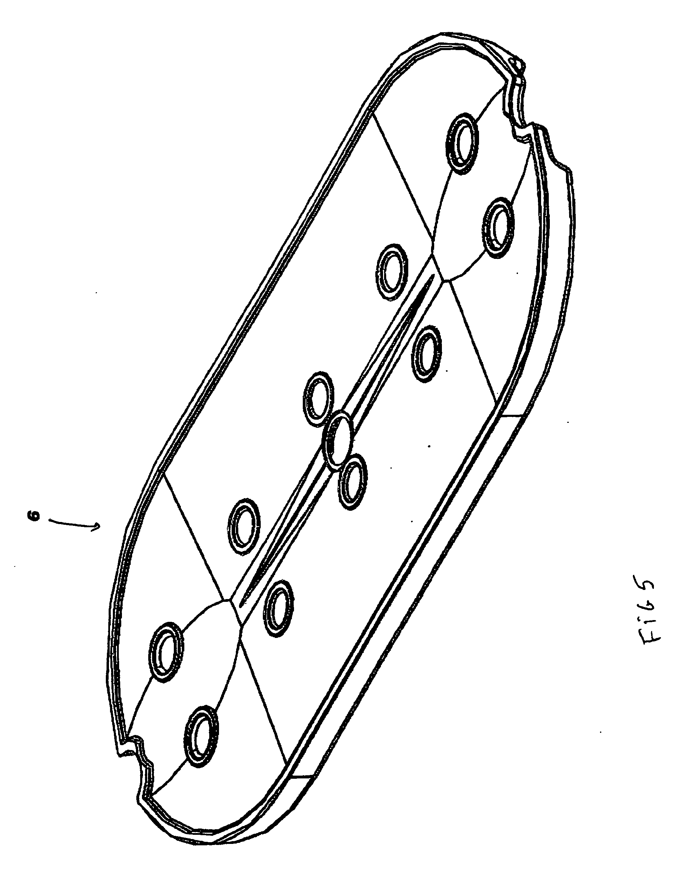

- FIG 5: Une surface de collecte

En se reportant au dessin, on voit un réservoir 1 pour stocker de l'eau de pluie.

Il s'inscrit dans un parallélépipède rectangle. Sa longueur sera de l'ordre de 2 mètres, sa hauteur de l'ordre de 1,80 mètre et son épaisseur de 30 à 40cm. Ce réservoir peut être utilisé comme mur de séparation et on note que les deux extrémités verticales présentent des moyens en vue de le fixer sur des poteaux. Cette fixation évite le basculement du réservoir. Cette fixation est ici conformée comme un profilé en U pour ceindre partiellement un poteau.

Le réservoir est constitué de tubes 2 cylindriques d'axes verticaux de section circulaire comportant en partie haute des conduites 3 reliant deux à deux les tubes et en partie basse des conduites inférieures 4 reliant deux à deux les tubes, l'ensemble des dits tubes présentant un orifice 7 de remplissage positionné au dessus d' un 2A des tubes dite tube principal et les conduites inférieures 4A partant de ce tube principal sont situées à un niveau supérieur aux autres conduites inférieures afin de constituer un volume de décantation.

Les tubes sont accessoirement fermés en partie supérieure et cette paroi supérieure présente l'orifice de remplissage.

Dans une variante, le réservoir porte un couvercle 6 formant une surface collectrice d'étendue supérieure à la surface cumulée des sections des tubes, cette surface collectrice présentant un orifice 15 d'évacuation se positionnant au droit de l'orifice de remplissage. L'exemple représenté montre un exemple de surface dont la largeur de surface collectrice est de l'ordre de 3 fois la dimension correspondante du réservoir.

La section globalement circulaire de chaque tube limite la déformation de la paroi soumise à la pression de l'eau contenue dans le volume car la pression dans un plan horizontal est régulièrement répartie. Les conduites ont pour but d'établir la communication entre les volumes qui se remplissent et se vident suivant le principe des vases communicants. La longueur de ces conduites est faible (10cm). La différence de niveau des conduites basses permet à la partie inférieure du tube principal de jouer le rôle de bac à décantation.

Le fond de ce tube principal est hémisphérique afin de faciliter le nettoyage. De préférence tous les tubes comportent un fond hémisphérique.

Le nettoyage peut se faire par aspiration.

On notera que le réservoir est obtenu par assemblage de deux demi coquilles selon un plan de joint vertical. Un bord externe 5 permet d'assembler les demi coquilles par un procédé approprié au matériau utilisé (soudure par ultra son etc..).

Ce bord externe, en partie basse forme une sorte de nervure 5A sous le plan horizontal passant par le fond des tubes. Pour éviter que le réservoir ne pose que sur cette nervure, il est prévu un socle 8 comportant des empreintes 9 pour y recevoir le fond de chaque tube et une rainure 10 apte à loger au moins la hauteur de la nervure 5A. La profondeur de la rainure 10 est légèrement supérieure à la hauteur de la nervure pour ne pas la solliciter.

Le socle a une base élargie de sorte qu'il protège le réservoir des accidents que pourrait induire la lame de coupe d'un outil de jardin.

Pour améliorer l'effet de vases communicants, il est prévu des conduites 11 dites médianes positionnées sensiblement à mi hauteur des tubes.

Il est prévu à la base des réservoirs un moyen 12 de connexion hydraulique avec un autre réservoir (vases communicants) ainsi qu'un moyen 13 de branchement d'un tuyau par exemple d'arrosage.

La surface collectrice du couvercle est aménagée pour présenter des surfaces inclinées qui guident l'eau vers l'orifice de remplissage. On voit des zones 14 éventuellement prédécoupée pour l'introduction d'une descente de gouttière en complément de la surface collectrice.

On a donc constitué un réservoir formant cloison apte à y monter une surface de collecte de l'eau de pluie qui offre une bonne résistance à la déformation par la forme tubulaire de ces tubes. La présence aux extrémités de moyens de fixation avec un poteau permet de le sécuri et le monter pour délimiter une zone comme le ferait une clôture.

Il peut être monté sur une terrasse pour protéger du vent et/ou des regards.

La présence d'une surface de collecte permet de placer ce réservoir en pleine campagne ou loin d'une habitation et cependant collecter de l'eau.

On peut prévoir un simple couvercle.

Lorsque le réservoir comporte une paroi supérieure solidaire des parois verticales, celle-ci peut comporter au droit de chaque tube une ouverture pour le nettoyage du tube correspondant.

## Revendications

1. Réservoir de stockage d'eau de pluie de forme s'inscrivant dans un parallélépipède rectangle constitué de tubes (2) cylindriques d'axes verticaux de section circulaire comportant en partie haute des conduites (3) dites supérieures reliant deux à deux les tubes et en partie basse des conduites (4) inférieures reliant deux à deux les tubes, l'ensemble des dits tubes présentant un orifice de remplissage positionné au dessus d' un (2A) des tubes dite tube principal ce réservoir étant **caractérisé en ce que** les conduites (4A) inférieures partant de ce tube principal sont situées à un niveau supérieur aux autres conduites inférieures afin de constituer un volume de décantation dans ce dit tube principal.

2. Réservoir de stockage selon la revendication 1 **caractérisé en ce qu'**il comprend un couvercle (6) formant une surface collectrice d'étendue supérieure à la surface cumulée des sections des tubes, cette surface collectrice présentant un orifice d'évacuation se positionnant au droit de l'orifice de remplissage.

3. Réservoir de stockage selon la revendication 1 ou 2 **caractérisé en ce que** le réservoir est obtenu par assemblage de deux demi coquilles selon un plan de joint vertical.

4. Réservoir de stockage selon la revendication 3 **caractérisé en ce que** le reservoir présente en partie basse une nervure (5A) sous le plan horizontal passant par le fond des tubes.

5. Réservoir de stockage selon la revendication 4 **caractérisé en ce qu'**il comprend un socle (8) comportant des empreintes (9 )pour y recevoir le fond de chaque tube et une rainure (10) apte à loger au moins la hauteur de la nervure (5A).

6. Réservoir de stockage selon l'une quelconque des revendications précédentes **caractérisé en ce qu'**au moins le fond du tube principal est hémisphérique.

7. Réservoir de stockage selon l'une quelconque des revendications précédentes **caractérisées en ce que** les deux extrémités verticales présentent des moyens en vue de le fixer sur des poteaux.

8. Réservoir de stockage selon la revendication 2 **caractérisé en ce que** la surface collectrice du couvercle est aménagée pour présenter des surfaces inclinées qui guident l'eau vers l'orifice de remplissage

## Patentansprüche

1. Regenwassertank mit einer sich in ein rechteckiges Parallelepiped einpassenden Form, der von zylindrischen Rohren (2) mit senkrechten Achsen mit rundem Querschnitt gebildet ist, die im oberen Teil so genannte obere, die Rohre paarweise verbindende Rohrleitungen (3) und im unteren Teil untere, die Rohre paarweise verbindende Rohrleitungen (4) umfassen, wobei die Rohrgruppe eine Füllöffnung aufweist, die über einem (2A) der Rohre, bezeichnet als Hauptrohr, angeordnet ist, wobei der Tank **dadurch gekennzeichnet ist, dass** die von dem Hauptrohr ausgehenden unteren Rohrleitungen (4A) höher liegen als die anderen unteren Rohrleitungen, um in diesem so genannten Hauptrohr ein Klärvolumen zu bilden.

2. Regenwassertank nach Anspruch 1, **dadurch gekennzeichnet, dass** er einen Deckel (6) umfasst, der eine Sammeloberfläche bildet, mit einer Ausdehnung, die größer ist als die kumulierte Oberfläche der Rohrquerschnitte, wobei die Sammeloberfläche eine rechtwinklig zur Füllöffnung angeordnete Ablauföffnung aufweist.

3. Regenwassertank nach Anspruch 1 oder 2, **dadurch gekennzeichnet, dass** sich der Tank durch Zusammenfügen von zwei Formhälften entlang einer vertikalen Trennebene ergibt.

4. Regenwassertank nach Anspruch 3, **dadurch gekennzeichnet, dass** der Tank im unteren Teil eine Rippe (5A) unter der durch den Boden der Rohre verlaufenden waagerechten Ebene aufweist.

5. Regenwassertank nach Anspruch 4, **dadurch gekennzeichnet, dass** er einen Sockel (8) umfasst, der Vertiefungen (9) zum Aufnehmen des Bodens eines jeden Rohrs und eine Fuge (10) aufweist, die wenigstens die Höhe der Rippe (5A) aufzunehmen vermag.

6. Regenwassertank nach einem der vorhergehenden Ansprüche, **dadurch gekennzeichnet, dass** wenigstens der Boden des Hauptrohrs halbkugelig ist.

7. Regenwassertank nach einem der vorhergehenden Ansprüche, **dadurch gekennzeichnet, dass** die beiden senkrechten Enden Mittel aufweisen, um ihn an Pfosten zu befestigen.

8. Regenwassertank nach Anspruch 2, **dadurch gekennzeichnet, dass** die Sammeloberfläche des Deckels so ausgebildet ist, dass sie schräge Flächen aufweist, die das Wasser zu der Füllöffnung leiten.

## Claims

1. Storage tank for rain water of a shape described by a rectangular parallelepiped made up of cylindrical tubes (2) of circular section with vertical axes comprising at the upper part so called top pipes (3) connecting the tubes in pairs and at the lower part bottom pipes (4) connecting the tubes in pairs, the assembly of said tubes having a filling orifice positioned above one (2A) of the tubes, namely a main tube of this tank, **characterised in that** the bottom pipes (4A) branching from this main tube are disposed at a higher level than other bottom pipes in order to form a settlement volume in this main tube.

2. Storage tank as claimed in claim 1, **characterised in that** it has a cover (6) forming a collection surface, the extension of which is greater than the total surface of the sections of the tubes, this collection surface having a drainage orifice positioned in alignment with the filling orifice.

3. Storage tank as claimed in claim 1 or 2, **characterised in that** the tank is obtained by assembling two half-shells along a vertical joint plane.

4. Storage tank as claimed in claim 3, **characterised in that** the tank has a rib (5A) in the lower part underneath the horizontal plane extending along the base of the tubes.

5. Storage tank as claimed in claim 4, **characterised in that** it has a base (8) having indentations (9) in which the base of each tube is received and a groove (10) designed to accommodate at least the height of the rib (5A).

6. Storage tank as claimed in any one of the preceding claims, **characterised in that** at least the base of the main tube is hemispherical.

7. Storage tank as claimed in any one of the preceding claims, **characterised in that** the two vertical ends have means for securing it to posts.

8. Storage tank as claimed in claim 2, **characterised in that** the collection surface of the cover is disposed so that it has inclined surfaces which guide the water towards the filling orifice.
